# DEMANDE DE BREVET EUROPEEN

(11) **EP 1 096 142 A2**
(43) Date de publication de la demande: **02.05.2001**
(21) Numéro de dépôt: 00203723.2
(22) Date de dépôt: 25.10.2000
(51) Int. Cl.: F03B 13/00, F04F 5/04, F02C 6/16

(54) **Installation hydro-électrique avec turbine à air comprimé**

(30) Priorité: 25.10.1999 BE 9900705
(71) Demandeur: Savonie, Daniel, 5030 Beuzet (BE)
(72) Inventeur: Savonie, Daniel, 5030 Beuzet (BE)
(74) Mandataire: Colens, Alain

(57) **Abrégé**

L'invention concerne une installation hydroélectrique hybride avec turbine à eau et turbine à air comprimé 9. L'air comprimé est obtenu par absorption dans une conduite forcée 3 parcourue par de l'eau, l'eau et l'air comprimé étant séparé dans un séparateur 7 préalablement au passage dans des turbines respectives. L'air comprimé peut être stocké dans un réservoir 8. L'eau peut provenir d'un barrage de montagne ou d'un barrage au fil de l'eau. Dans le premier cas, le séparateur et le réservoir peuvent être localisés à l'intérieur de la montagne.

## Description

La présente invention concerne un dispositif de récupération d'énergie par chute de niveau d'altitude d'un liquide, plus particulièrement d'eau.

L'invention s'applique plus particulièrement à des dispositifs d'altitude en montagne caractérisés par de fortes dénivellations entre le niveau d'eau actionnant une turbine et l'eau d'un réservoir ou d'un glacier.

L'abandon des centrales nucléaires et le problème des nuisances engendrés par le passage concentré de centaines de milliers de camions par an dans des vallées à l'équilibre écologique précaire amplifie le besoin en énergie électrique par exemple pour permettre le passage des camions et remorques sur wagons de chemin de fer.

On a donc besoin d'importante quantité d'énergie électrique, en particulier dans les pays montagneux ou les centrales électriques seront de plus en plus sollicitées. Le rendement et la souplesse des installations existantes devient donc un facteur de plus en plus important.

L'invention se propose d'améliorer sensiblement le rendement et/ou la souplesse d'utilisation d'une installation de centrale électrique à conduite forcée sous pression, aussi bien en pays montagneux (barrages d'altitude) que pour des centrales "au fil de l'eau" à très grand débit d'eau (Rhin, Rhône par exemple).

Selon , l'invention, on laisse de l'air se faire aspiré par le flux de l'eau destiné à faire tourner une turbine, de façon réglable et controllable. L'air intégré à l'eau sous forme de bulles va se comprimer au fur et à mesure de l'augmentation de la pression de l'eau lors de sa descente dans les conduites. Avant d'atteindre la turbine, le mélange air-eau passe par un séparateur d'air. Le séparateur peut se présenter sous la forme d'une grande cloche où les bulles comprimées se séparent de l'eau. L'air comprimé, qui est stockable, est conduit vers une centrale séparée où il peut faire tourner des turbines auxiliaires aux turbines prévues pour l'eau. On peut ainsi obtenir une source d'air comprimé à une pression variant de 20-50 kg/cm2.

Si la centrale est alimentée par un barrage en pays montagneux, la réalisation de l'invention est facilitée et, en outre, la stockabilité de l'air comprimé peut être avantageusement exploitée. Le réservoir séparateur d'air peut en effet consister en une cavité dans la montagne (tunnel creusé et rendu étanche). Cette réserve d'air comprimé pourra être utilisée avec plus de souplesse qu'une centrale hydraulique classique, lorsque le besoin s'en fait sentir, c'est à dire en fonction de la demande.

Un tel tunnel , unique ou multiple et éventuellement compartimenté, devra être très étanche et résistant : cela permettra de stocker une énergie potentielle considérable dont la capacité est proportionnelle au volume du tunnel-réservoir.

L'opération d'introduction de l'air se fait de préférence à un niveau intermédiaire, lorsque l'eau a acquis une grande vitesse dans les conduites, de l'ordre de 6 m/sec.

Cette introduction est réalisée de manière connue et peut être passive ou active, par exemple par injection forcée, par effet de vortex ou par turbulences.

L'invention sera mieux comprise à la lecture de le description qui suit en se référant aux dessins en annexe fournis à titre d'exemple uniquement.

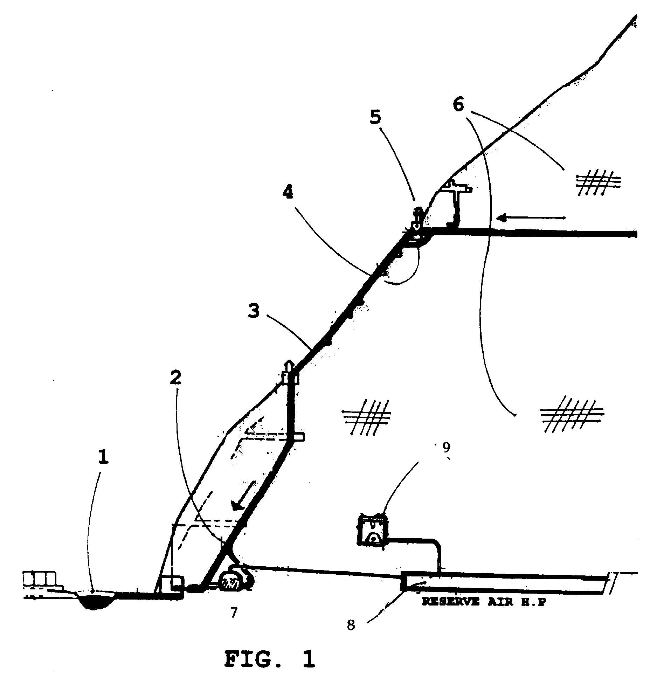

La fig. 1 représente en coupe longitudinale un tuyau 3 descendant à partir d'un barrage de montagne (non-illustré) vers un fleuve 1, le différence d'altitude pouvant s'étendre par exemple de 1000 à 2500 m. La roche est représentée en 6 et les différents éléments de l'installation sont incorporés dans la montagne. En 5 on distingue le site d'injection et de réglage d'arrivée d'air avec vanne et en 4 on distingue une déviation (by-pass) également avec vanne. En 2 on prévoit une déviation vers un séparateur d'air 7 sous la forme d'un réservoir en cloche d'où émane à la partie supérieure une conduite d'air comprimé vers un réservoir 8 sous la forme d'un tunnel rendu étanche de manière connue et creusé dans la roche de la montagne. On illustre également en 9 une centrale à air haute pression.

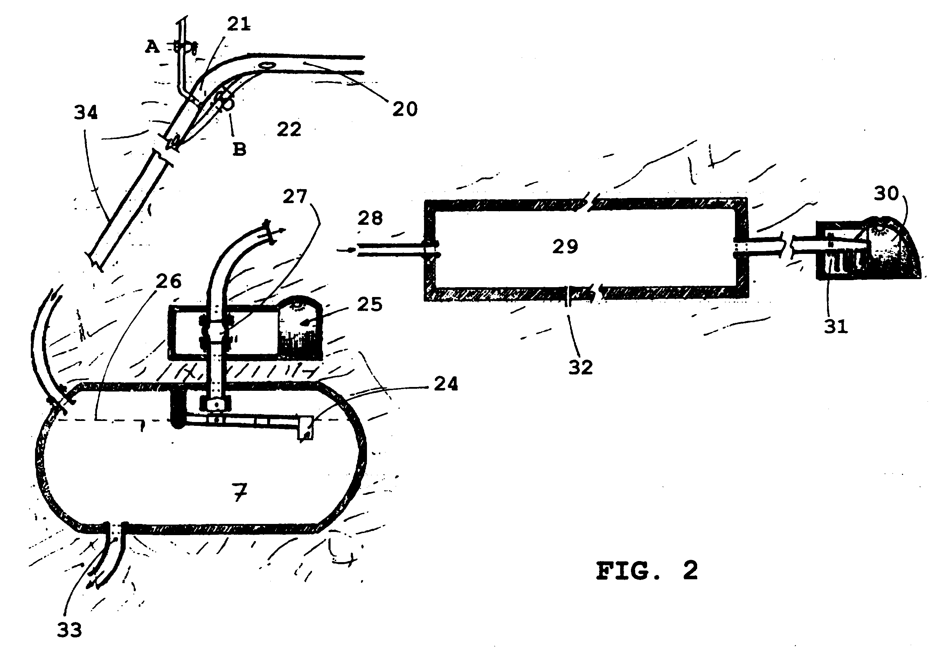

La fig. 2 illustre, sous une forme éclatée, les différents éléments décrits dans la figure 1 de manière plus détaillée. En 21 on ajoute de l'air à l'eau 20 provenant du barrage, via une vanne A, qui sera par exemple une vanne, de préférence télécommandée. Une vanne B d'arrêt également télécommandée, permet de contrôler le passage de l'eau par le by-pass. Les bulles d'air se compriment dans la section 34 avant de déboucher dans le séparateur 7 où on illustre le niveau d'eau 26, le flotteur 24 et la sortie 33 d'eau haute pression vers les turbines puis la décharge dans le fleuve. En 27 se trouve une vanne anti-retour, accessible par une galerie 25 de visite et d'entretien. L'air comprimé (env. 40 kg/cm2) arrive en 28 dans le tunnel de stockage 29, comprenant une installation de purgeage 32. A l'autre extrémité du tunnel se trouve la sortie d'air comprimé avec une salle des détendeurs, les conduites 31 vers les turbines et une galerie de visite 30. Les diverses vannes peuvent avantageusement être télécommandées.

## Revendications

1. Installation hydroélectrique avec turbine à eau et turbine à air comprimé caractérisé en ce que l'air est aspiré dans une conduite forcée parcourue par de l'eau, l'eau et l'air comprimé étant séparé dans un séparateur préalablement au passage dans des turbines respectives.

2. Installation hydroélectrique selon la revendication 1 caractérisé en ce que l'eau provient d'un barrage.

3. Installation selon la revendication précédente caractérisée en ce que le barrage est un barrage de montagne.

4. Installation hydroélectrique selon n'importe laquelle des revendications précédentes dans lequel le séparateur est logé et rendu étanche dans la roche de la montagne.

5. Installation hydroélectrique selon n'importe laquelle des revendications précédentes dans lequel l'air comprimé est stocké dans au moins un réservoir logé dans la montagne préalablement au passage dans la turbine.

6. Installation hydroélectrique selon n'importe laquelle des revendications précédentes dans lequel la vitesse de l'eau dans la conduite forcée est supérieure à 4 m/sec, de préférence égale ou supérieure à 6 m/sec.

7. Installation selon la revendication 1 caractérisée en ce qu'elle est située au fil de l'eau.
